# EUROPÄISCHE PATENTSCHRIFT

(11) **EP 1 726 083 B1**
(45) Veröffentlichungstag und Bekanntmachung des Hinweises auf die Patenterteilung: **30.11.2011**
(21) Anmeldenummer: 05716936.9
(22) Anmeldetag: 07.03.2005
(51) Int. Cl.: H02K 33/16, H02K 1/14

(54) **LINEARE ANTRIEBSEINRICHTUNG MIT MAGNETJOCHKÖRPER UND PERMANENTMAGNETISCHEM ANKERKÖRPER**
LINEAR DRIVE DEVICE WITH A MAGNET YOKE BODY AND A PERMANENT MAGNETIC ARMATURE
DISPOSITIF D'ENTRAINEMENT LINEAIRE COMPORTANT UN CORPS DE CULASSE MAGNETIQUE ET UN CORPS D'ANCRAGE A AIMANTATION PERMANENTE

(30) Priorität: 05.03.2004 DE 102004010847
(43) Veröffentlichungstag der Anmeldung: 29.11.2006
(73) Patentinhaber: BSH Bosch und Siemens Hausgeräte GmbH, 81739 München (DE)
(72) Erfinder: RIES, Günter, 91056 Erlangen (DE)
(86) Internationale Anmeldenummer: PCT/EP2005/051006
(87) Internationale Veröffentlichungsnummer: WO 2005/086328

(56) Entgegenhaltungen:
- EP-A- 0 915 553
- CH-A5- 624 522
- GB-A- 2 362 433
- PATENT ABSTRACTS OF JAPAN Bd. 2000, Nr. 12, 3. Januar 2001 (2001-01-03) -& JP 2000 253640 A (SANYO ELECTRIC CO LTD), 14. September 2000 (2000-09-14)
- PATENT ABSTRACTS OF JAPAN Bd. 2000, Nr. 11, 3. Januar 2001 (2001-01-03) -& JP 2000 224829 A (SANYO ELECTRIC CO LTD), 11. August 2000 (2000-08-11)

## Beschreibung

Die Erfindung bezieht sich auf lineare Antriebseinrichtungen
- mit wenigstens einer Erregerwicklung zur Erzeugung eines veränderlichen Magnetfeldes,
- mit einem die Erregerwicklung aufnehmenden magnetflussführenden Hauptjochkörper mit Jochschenkeln,
- mit einem wicklungsfreien Gegenjochkörper, der dem Hauptjochkörper gegenüberliegt, wobei zwischen dem Hauptjochkörper und dem Gegenjochkörper ein axialer Spalt vorhanden ist,

und
mit einem Ankerkörper mit wenigstens zwei axial hintereinander angeordneten permanentmagnetischen Magnetteilen mit gegensinniger Magnetisierung, wobei der Ankerkörper von dem Magnetfeld der Erregerwicklung in dem Spalt in eine
axial oszillierende Bewegung zu versetzen ist.

Eine derartige Antriebseinrichtung geht aus der US 5 559 378 A hervor.

Entsprechende Antriebseinrichtungen werden insbesondere dafür eingesetzt, Pumpkolben von Verdichtern in eine lineare, oszillierende Schwingung zu versetzen. Das System aus einem derartigen Verdichter und einer zugeordneten linearen Antriebseinrichtung wird deshalb auch als Linearverdichter bzw. -kompressor bezeichnet (vgl. z.B. JP 2002-031054 A). Bei entsprechenden bekannten Linearverdichtem sind dessen schwingungsfähigen Teile für eine bestimmte Schwingungsfrequenz ausgelegt.

Die aus der US 5,559,378 A bekannte Antriebseinrichtung weist wenigstens eine Erregerwicklung in einem geblechten Eisenjochkörper in E-Form als einem dreipoligen Hauptjochkörper auf. Diesem liegt ein Gegenjochkörper gegenüber, der keine Erregerwicklungsteile enthält und als den magnetischen Widerstand in einem Magnetflusskreis verringernder Teil dient. Zwischen dem Hauptjochkörper und dem Gegenjochkörper ist ein schlitzartiger Spalt ausgebildet, in dem das Magnetfeld eine von der Stromrichtung abhängige Kraft auf zwei alternierend gepolte, plattenförmige Permanentmagnete eines dort befindlichen, axial beweglichen Ankerkörpers ausübt. Diese Bewegung kann zum Antrieb eines Pumpkolbens eines Verdichters genützt werden.

Bei der aus der US-A-Schrift bekannten Antriebseinrichtung sollen die Polflächen der beiden seitlichen Polschenkel des Hauptjochkörpers vom E-Typ jeweils eine deutlich größere axiale Ausdehnung als der mittlere Polschenkel aufweisen. Dies wird dadurch gewährleistet, dass die seitlichen Polschenkel auf ihrer dem Ankerkörper zu- gewandten Seite zu einem sich parallel zur Oberfläche des Ankerkörpers erstreckenden Teil abgeknickt ausgebildet sind. Die Herstellung eines entsprechenden Hauptjochkörpers ist entsprechend aufwendig. Außerdem wird damit die Anordnung der Erregerwicklungsteile in den zwischen den Schenkeln ausgebildeten Wicklungsfenstern erschwert.

Die Offenlegungsschrift JP-A-2000 253640 zeigt eine lineare Antriebseinrichtung, bei der zur Reduktion von Wirbelströmen im Ankerkörper die Magnete in Segmente mit dazwischen angeordneten, dünnen Isolierplatten unterteilt ist.

Die Offenlegungsschrift JP-A-2000 224829 zeigt eine lineare Antriebseinrichtung umfassend einen magnetischen Jochkörper mit einem zentralen Bereich, welcher im Wesentlichen eine E-Form aufweist.

Aufgabe der vorliegenden Erfindung ist es somit, die lineare Antriebseinrichtung mit den eingangs genannten Merkmalen dahingehend auszubilden, dass ihr Aufbau vereinfacht ist.

Eine erste Lösung dieser Aufgabe ist erfindungsgemäß mit den Maßnahmen nach Anspruch 1 gegeben. Dementsprechend sollen alle Jochschenkel des Hauptjochkörpers an ihren dem Ankerkörper zugewandten Polflächen gleiche axiale Breiten aufweisen, wobei benachbarte Jochschenkel jeweils axial gleich weit um einen Polflächenabstand beabstandet sind, und soll die axiale Ausdehnung jedes Magnetteiles zumindest annähernd gleich der Summe einer Polflächenbreite und einem Polflächenabstand sein. Dabei sollen Abweichungen der Summe um ±10 % mit eingeschlossen sein.

Die mit dieser Ausgestaltung der Antriebseinrichtung verbundenen Vorteile sind insbesondere in einem einfachen und kostengünstigen Aufbau der Erregerwicklung bei gleichzeitig beschränktem Gewicht an magnetflußführendem Material zu sehen.

Vorteilhafte Ausgestaltungen der erfindungsgemäßen linearen Antriebseinrichtung gehen aus den abhängigen Ansprüchen hervor. Dabei können für die Antriebseinrichtung nach Anspruch 1 zusätzlich noch folgende Merkmale einzeln oder in Kombination vorgesehen werden:
- Polschuhkörper können an die jeweiligen Jochschenkel ansetzbar sein. Mit dieser Maßnahme wird auf einfache Weise ein größerer Wickelraum und damit ein größerer Drahtquerschnitt in den Wicklungsfenstern erreicht. Verbunden damit ist ein geringerer Spulenwiderstand und folglich weniger elektrische Verluste.

Eine weitere Lösung der genannten Aufgabe ist erfindungsgemäß in den Maßnahmen nach Anspruch 3 zu sehen. Dementsprechend soll die lineare Antriebseinrichtung mit den eingangs genannten Merkmalen dahingehend ausgebildet sein, dass ihr Hauptjochkörper und ihr Gegenjochkörper einen gemeinsamen Jochkörper mit gemeinsamen seitlichen Jochschenkeln bilden, wobei der Hauptjochkörper einen mittleren Jochschenkel besitzt, der an seiner dem Ankerkörper zugewandten Polfläche eine axiale Breite aufweist, die mindestens so groß wie die axiale Ausdehnung jedes Magnetteiles ist.

Diese weitere Ausführungsform zeichnet sich durch eine beschränkte Magnetbreite und damit entsprechend wenig Permanentmagnetmaterial aus. Folglich ist neben dem Materialkostenvorteil auch die bewegte Masse entsprechend geringer.

Diese Ausführungsform einer Antriebseinrichtung weist zusätzlich noch folgende Merkmale auf:

- So ist die axiale Breite des mittleren Jochschenkels größer als die der seitlichen Jochschenkel, wobei die
axiale Breite der seitlichen Jochschenkel insbesondere jeweils halb so groß wie die des mittleren Jochschenkels ist. Damit ist eine entsprechende Begrenzung des magnetflußführenden Materials des gemeinsamen Jochkörpers verbunden.
Außerdem ist der Hub des Ankerkörpers während seiner oszillierenden Bewegung kleiner als die entsprechende
Ausdehnung jedes die mindestens eine Erregerwicklung aufnehmenden Wicklungsfensters zwischen den Jochschenkeln ist. Dabei kann insbesondere die axiale Ausdehnung jedes Wicklungsfensters gleich dem axialen Abstand der Polfläche des mittleren Jochschenkels von dem entsprechenden seitlichen Jochschenkel sein. Eine einfache Montage der Erregerwicklung ist so möglich. Außerdem wird vermieden, dass der Ankerkörper bei seiner oszillierenden Bewegung an die seitlichen Jochschenkel anschlagen kann.

Vorteilhafte Ausgestaltungen der beiden Ausführungsformen von erfindungsgemäßen linearen Antriebseinrichtungen können noch zusätzlich folgende Merkmale einzeln oder in Kombination aufweisen :
- So kann der Gegenjochkörper Jochschenkel aufweisen mit den Jochschenkeln des Hauptjochkörpers entsprechender axialer Breite an den Polflächen. Stattdessen ist es auch möglich, dass der Gegenjochkörper plattenförmig oder quaderförmig ausgebildet ist, d. h. keine ausgeprägten Jochschenkel besitzt.
- Besonders vorteilhaft wird die axiale Breite der wenigstens einen Polfläche zumindest annähernd gleich dem Hub des Ankerkörpers bei seiner oszillierenden Bewegung gewählt.
- Zweckmäßig sind die Magnetteile platten- oder streifenförmig ausgebildet.
- Bevorzugt ist der Ankerkörper der Antriebseinrichtung mit einem Pumpkolben eines Verdichters starr verbunden.

Weitere vorteilhafte Ausgestaltungen der erfindungsgemäßen linearen Antriebseinrichtungen gehen aus den vorstehend nicht angesprochenen Unteransprüchen und der Zeichnung hervor.

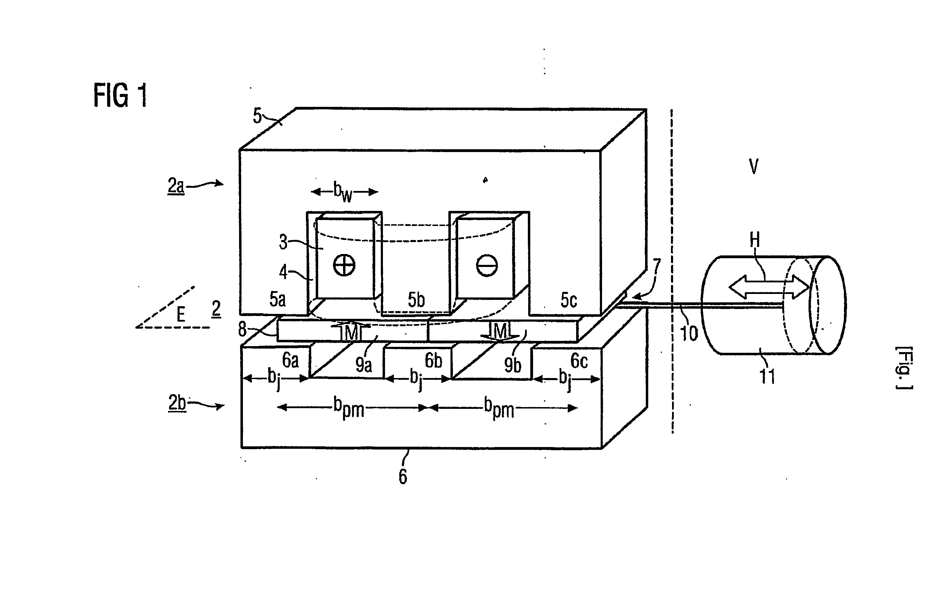

Die Erfindung wird nachfolgend an Hand bevorzugter Ausführungsbeispiele unter Bezugnahme auf die Zeichnung noch weiter erläutert. Von den Figuren zeigen

deren Figur 1 als schematisierte Schrägansicht eine lineare Antriebseinrichtung,

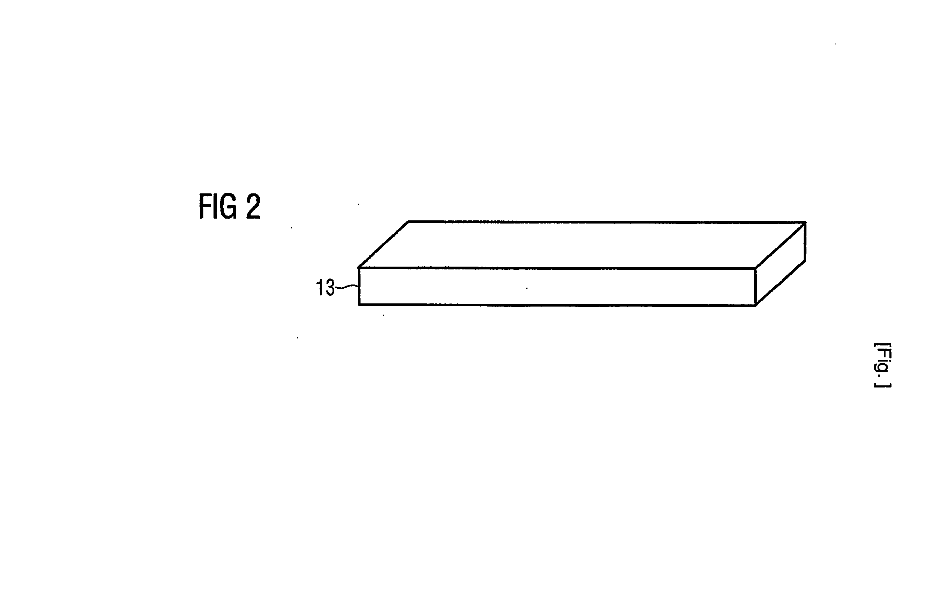

deren Figur 2 eine besondere Ausführungsform eines Gegenjochkörpers,

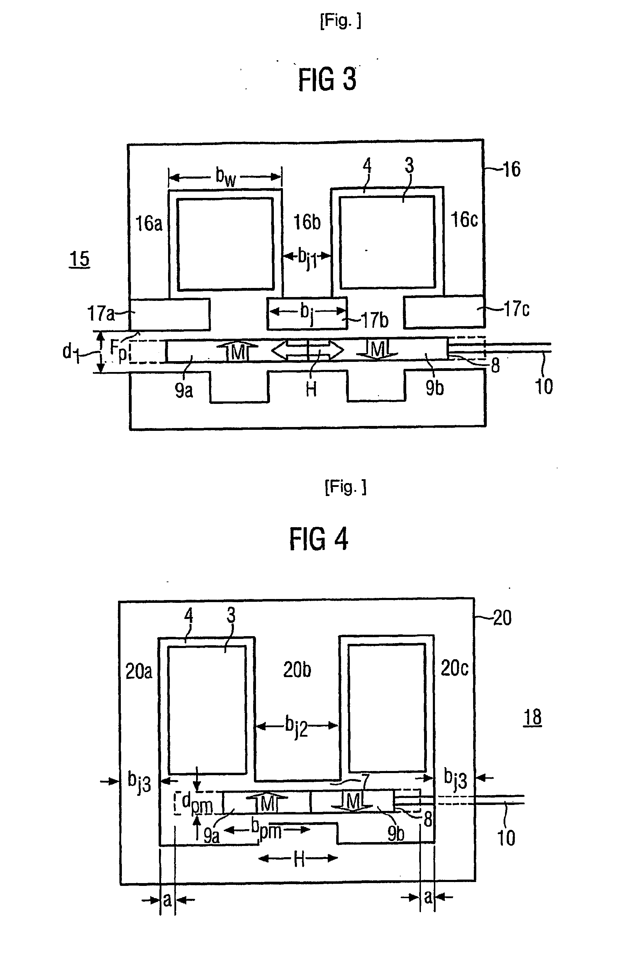

deren Figur 3 eine besondere Ausführungsform eines Hauptjochkörpers

und

deren Figur 4 eine besondere Ausführungsform eines Haupt- und Gegenjochkörpers.

Dabei sind in den Figuren sich entsprechende Teile jeweils mit denselben Bezugszeichen versehen.

Bei der in Figur 1 angedeuteten linearen Antriebseinrichtung wird von an sich bekannten Ausführungsformen ausgegangen, wie sie für Linear- verdichter vorgesehen werden (vgl. die eingangs genannte US 5f559378 A). Aus der Schrägansicht der Figur sind im Wesentlichen nur ein oberer und ein unterer Teil 2a bzw. 2b einer solchen Antriebseinrichtung ersichtlich, wobei diese Teile zu beiden Seiten einer axialen Ebene E angeordnet sind. Die Antriebseinrichtung 2 umfasst in ihrem oberen Teil 2a eine Erregerwicklung 3 in Wicklungsfenstern 4 zwischen Jochschenkeln 5a bis 5c eines magnetflussführenden Hauptjochkörpers 5. Dieser Jochkörper 5 hat z. B. die bekannte E-Form. In dem unteren Teil 2b auf der gegenüberliegenden Seite der Ebene E ist ein magnetflussführender Gegenjochkörper 6 ebenfalls in E-Form vorgesehen. Er trägt keine Erregerwicklungsteile, so dass seine Jochschenkel 6a bis 6c gegenüber den Jochschenkeln 5a bis 5c senkrecht zur Ebene E wesentlich kürzer ausgeführt sein können. In einem zentralen, kanalartigen oder schlitzartigen Spalt 7 zwischen diesen beiden gegenüberliegenden Jochkörpern bzw. ihren gegenüberliegenden Polflächen F befindet sich ein magnetischer Anker oder Ankerkörper 8 mit beispielsweise zwei platten- oder streifenförmigen Permanentmagneten 9a und 9b aus einem permanentmagnetischen Material wie z. B. NdFeB. Deren senkrecht zur Ebene E antiparallel gerichteten Magnetisierungen M sind durch gepfeilte Linien angedeutet. Dieser Ankerkörper 8 kann in dem veränderlichen Magnetfeld der Erregerwicklung 3 in axialer Richtung in der Ebene E eine oszillierende Bewegung ausführen. Er weist mindestens einen axial seitlichen, nur angedeuteten Verlängerungsteil 10 auf, der vorteilhaft starr mit einem Pumpkolben 11 eines in der Figur nicht näher ausgeführten Verdichters V verbunden ist. Dieser Pumpkolben führt folglich die axial oszillierende Bewegung des Ankerteils 8 um einen Ankerhub H mit aus.

Erfindungsgemäß sollen alle Jochschenkel 5a bis 5c und 6a bis 6c im Bereich ihrer Polflächen Fₚ gleiche axiale Breiten bⱼ aufweisen. Dabei kann die Breite bⱼ so gewählt werden, dass sie dem Hub H des bewegten Ankerkörpers entspricht. Außerdem werden die axiale Breite b und der Polflächenabstand benachbarter Polflächen, der der Wicklungsfensterbreite b_{w} entspricht, so gewählt, dass die Summe bⱼ + b_{w} zumindest annähernd gleich der axialen Ausdehnung bₚₘ jedes Magnetteiles 9a oder 9b ist. Dabei sollen Abweichungen von ±_ 10% vom exakten Wert der Summe zugelassen sein.

Statt des in Figur 1 gezeigten unteren Gegenjochkörpers 6 mit kurzen Jochschenkeln 6a bis 6c kann gemäß Figur 2 auch ein unstrukturierter Gegenjochkörper 13 mit Platten- oder Quaderform vorgesehen sein.

Die im Querschnitt der Figur 3 angedeutete Ausführungsform einer linearen Antriebseinrichtung 15 unterscheidet sich von der nach Figur 1 dadurch, dass in ihrem oberen Teil 2a ihr
E-förmiger Hauptjochkörper 16 auf der dem Ankerkörper 8 zugewandten Seite besondere Polschuhe 17a bis 17c aufweist, deren
axiale Breite bⱼ dem Hub H des Ankerteils entspricht, jedoch in den Wicklungsfenstern außerhalb des Bereichs der Polflächen Fₚ eine größere axiale Ausdehnung b_{w} besitzt. Hier ist die axiale Breite bⱼ₁ der einzelnen Jochschenkel 16a bis 16c gegenüber den angesetzten Polschuhen 17a bis 17c verringert und so bemessen, dass der Magnetfluss vom Eisenquerschnitt noch ohne Eisensättigung getragen werden kann.

Gemäß einem entsprechenden konkreten Ausführungsbeispiel für NdFeB-Permanentmagnetteile 9a, 9b sowie Jochkörper 16 und 6 aus einer FeSi-Legierung sind folgende Werte wählbar:

Vorteilhaft wird dabei folgende Beziehung eingehalten: bⱼ₁_W_bⱼ·[Bᵣ/B_{Fe}]·(dₚₘ/d₁).

Außerdem sind:

bⱼ: Breite Polschuh = Hub 20 mm

dₚₘ: Dicke Permanentmagnetteile 3 mm

d₁: Weite Luftspalt 5 mm

Bᵣ: Remanenz der Permanentmagnetteile 1,1 T

B_{Fe}: Flussdichte im Eisenjochkörper 1,5 T

Für Beispiel: Breite pro Jochschenkel bⱼ₁ W 9 mm

Ein weiteres Ausführungsbeispiel einer linearen Antriebseinrichtung 18 ist aus Figur 4 zu entnehmen. Hier sind deren Hauptjochkörper und Gegenjochkörper zu einem gemeinsamen Jochkörper 20 mit M-Form und gemeinsamen seitlichen Jochschenkeln 20a und 20c zusammengefasst. Die axiale Breite bⱼ₂ seines mittleren, den Spalt 7 für den Ankerkörper 8 freilassenden Jochschenkels 20b soll dabei größer, vorzugsweise etwa doppelt so groß sein wie die entsprechende Breite bⱼ₃ der seitlichen Schenkel 20a und 20c. Auch hier entspricht der Ankerhub H der axialen Ausdehnung b ₚₘ der Magnetteile 9a und 9b, wobei bevorzugt die Breite bⱼ₂ des mittleren Jochschenkels 20b größer oder gleich der Magnetbreite b sein sollte. Wie ferner aus der Figur hervorgeht, ist die Breite b_{w} der Wicklungsfenster 4 größer als der Ankerhub H. Dabei sollte auf beiden axialen Seiten des Jochkörpers der Abstand a zwischen dem seitlichen Ende des Ankerkörpers 8 bei dessen maximaler Auslenkung und dem jeweils benachbarten Jochschenkel 20a bzw. 20b noch mindestens die halbe Dicke dₚₘ der Magnetteile 9a, 9b des Ankerkörpers 8 betragen; d.h., es sollte gelten : a W dₚₘ/2. In der Figur ist die maximale Auslenkung durch gestrichelte Linien angedeutet.

Bei dieser Ausführungsform der Antriebseinrichtung 18 mit M-Jochkörper 20 wird die mechanische Verbindung 10 beidseitig an dem seitlichen Jochschenkel 20c vorbeigeführt. Gegebenenfalls ist auch eine Bohrung in diesem Schenkel zur Durchführung des Verbindungsteils 10 denkbar.

Bezugszeichenliste

2 Antriebseinrichtung
1. Erregerwicklung

4 Wicklungsfenster

5 Hauptjochkörper

5a bis 5c Jochschenkel

6 Gegenjochkörper

6a bis 6c Jochschenkel

7 Spalt

8 Ankerkörper

9a, 9b Magnetteile

10 Verlängerungsteil
1. Pumpkolben

13 Gegenjochkörper

15 Antriebseinrichtung

16 Hauptjochkörper

17a bis 17c Polschuhe

18 Antriebseinrichtung

20 Jochkörper

20a bis 20c Jochschenkel

M Magnetisierungen

E Ebene

Fₚ Polflächen

V Verdichter

H Ankerhub

bⱼ, bⱼ₁, bⱼ₂, bⱼ₃ Schenkelbreiten

bₚₘ Magnetbreite

dₚₘ Magnetdicke

b₁ Luftspaltweite

a Abstand

## Patentansprüche

1. Lineare Antriebseinrichtung (15, 18) mit wenigstens einer Erregerwicklung (3) zur Erzeugung eines veränderlichen Magnetfeldes, mit einem die Erregerwicklung (3) aufnehmenden magnetflussführenden Hauptjochkörper (16) mit Jochschenkeln (16a bis 16c), mit einem wicklungsfreien Gegenjochkörper (6), der dem Hauptjochkörper (16) gegenüberliegt, wobei zwischen dem Hauptjochkörper (16) und dem Gegenjochkörper (6) ein axialer Spalt (7) vorhanden ist, und mit einem Ankerkörper (8) mit wenigstens zwei axial hintereinander angeordneten permanentmagnetischen Magnetteilen (9a, 9b) mit gegensinniger Magnetisierung, wobei der Ankerkörper (8) von dem Magnetfeld der Erregerwicklung (3) in dem Spalt (7) in eine axial oszillierende Bewegung zu versetzen ist, **dadurch gekennzeichnet, dass** alle Jochschenkel (16a, 16b, 16c) des Hauptjochkörpers (16) an ihren dem Ankerkörper (8) zugewandten Polflächen (Fₚ) gleiche axiale Breite (bⱼ) aufweisen, wobei die Polflächen (Fₚ) benachbarter Jochschenkel (16a, 16b, 16c) jeweils axial gleich weit um einen Polflächenabstand beabstandet sind, und dass die axiale Ausdehnung (bₚₘ) jedes Magnetteils (9a, 9b) gleich der Summe einer Polflächenbreite (bⱼ) und einem Polflächenabstand mit einer Abweichung von maximal ±10% ist, und dass der Hauptjochkörper (16) im Bereich seiner Polflächen (Fₚ) Polschuhkörper (17a bis 17c) aufweist, deren axiale Ausdehnung (bⱼ) größer ist als die entsprechende Ausdehnung (b_{w}) der die Erregerwicklung (3) aufnehmenden Wicklungsfenster (4) zwischen den Jochschenkeln (16a bis 16c) außerhalb des Bereichs der Polflächen (Fₚ).

2. Antriebseinrichtung nach Anspruch 1, **dadurch gekennzeichnet, dass** die Polschuhkörper (17a bis 17c) an die jeweiligen Jochschenkel (16a bis 16c) ansetzbar sind.

3. Lineare Antriebseinrichtung (15, 18) mit wenigstens einer Erregerwicklung (3) zur Erzeugung eines veränderlichen Magnetfeldes, mit einem die Erregerwicklung (3) aufnehmenden magnetflussführenden Hauptjochkörper (16) mit Jochschenkeln (16a, 16b, 16c), mit einem wicklungsfreien Gegenjochkörper (6), der dem Hauptjochkörper (16) gegenüberliegt, wobei zwischen dem Hauptjochkörper (16) und dem Gegenjochkörper (6) ein axialer Spalt (7) vorhanden ist, und mit einem Ankerkörper (8) mit wenigstens zwei axial hintereinander angeordneten permanentmagnetischen Magnetteilen (9a, 9b) mit gegensinniger Magnetisierung, wobei der Ankerkörper (8) von dem Magnetfeld der Erregerwicklung (3) in dem Spalt (7) in eine axial oszillierende Bewegung mit einem Hub (H) zu versetzen ist, **dadurch gekennzeichnet, dass** der Hauptjochkörper (16) und der Gegenjochkörper (6) einen gemeinsamen Jochkörper (20) mit gemeinsamen seitlichen Jochschenkeln (20a, 20c) bilden, wobei der Hauptjochkörper (16) einen mittleren Jochschenkel (20b) besitzt, der an seiner dem Ankerkörper (8) zugewandten Polfläche (Fₚ) eine axiale Breite (bⱼ₂) aufweist, die mindestens so groß wie die axiale Ausdehnung (bₚₘ) jedes Magnetteiles (9a, 9b) ist, dass die axiale Breite (bⱼ₂) des mittleren Jochschenkels (20b) größer als die der seitlichen Jochschenkel (20a, 20c) ist, dass der Hub (H) des Ankerteils (8) während der oszillierenden Bewegung kleiner als die entsprechende Ausdehnung (b_{w}) jedes die mindestens eine Erregerwicklung (3) aufnehmenden Wicklungsfensters (4) zwischen den Jochschenkeln (20a bis 20c) ist, und dass auf beiden axialen Seiten des Jochkörpers (20) der Abstand (a) zwischen dem seitlichen Ende des Ankerkörpers (8) bei dessen maximaler Auslenkung und dem jeweils benachbarten seitlichen Jochschenkel (20a, 20c) mindestens die halbe Dicke (dₚₘ) der Magnetteile (9a, 9b) beträgt.

4. Antriebseinrichtung nach Anspruch 3, **dadurch gekennzeichnet, dass** die axiale Breite (bⱼ₃) der seitlichen Jochschenkel (20a, 20c) jeweils halb so groß wie die des mittleren Jochschenkels (20b) ist.

5. Antriebseinrichtung nach Anspruch 3, **dadurch gekennzeichnet, dass** die axiale Ausdehnung (b_{w}) jedes Wicklungsfensters (4) gleich dem maximalen Abstand der Polflächen (Fₚ) des mittleren Jochschenkels (20b) von den entsprechenden seitlichen Jochschenkeln (20a, 20c) ist.

6. Antriebseinrichtung nach einem der vorangehenden Ansprüche, **dadurch gekennzeichnet, dass** der Gegenjochkörper (6), Jochschenkel (6a bis 6c) aufweist mit den Jochschenkeln (5a, 5c) des Hauptjochkörpers (5, 16) entsprechender axialer Breite (bⱼ) an den Polflächen (Fₚ).

7. Antriebseinrichtung nach einem der Ansprüche 1 bis 5, **dadurch gekennzeichnet, dass** der Gegenjochkörper (13) plattenförmig oder quaderförmig ausgebildet ist.

8. Antriebseinrichtung nach einem der vorangehenden Ansprüche, **dadurch gekennzeichnet, dass** die Magnetteile (9a, 9b) platten- oder streifenförmig ausgebildet sind.

9. Antriebseinrichtung nach einem der vorangehenden Ansprüche, **dadurch gekennzeichnet, dass** der Ankerkörper (8) mit einem Pumpkolben (11) eines Verdichters (V) starr verbunden ist.

## Claims

1. Linear drive device (15, 18) with at least one excitation winding (3) for producing a variable magnetic field, with a main yoke body (16), which receives the excitation winding (3) and conducts magnetic flux, with yoke limbs (16a to 16c), with a winding-free counter-yoke body (6) lying opposite the main yoke body (16), wherein an axial gap (7) is present between the main yoke body (16) and the counter-yoke body (6), and with an armature body (8) with at least two permanently magnetic magnet parts (9a, 9b) which are arranged axially one behind the other and are magnetised in opposite sense, wherein the armature body (8) is set into an axially oscillating motion by the magnetic field of the excitation winding (3) in the gap (7), **characterised in that** all yoke limbs (16a, 16b, 16c) of the main yoke body (16) have at the pole surfaces (Fₚ) thereof facing the armature body (8) the same axial width (bⱼ), wherein the pole surfaces (Fₚ) of adjacent yoke limbs (16a, 16b, 16c) are respectively axially spaced-apart the same amount by a pole surface spacing and that the axial extent (bₚₘ) of each magnet part (9a, 9b) is equal to the sum of a pole surface width (bⱼ) and a pole surface spacing with a deviation of at most plus or minus 10%, and that the main yoke body (16) has in the region of the pole surfaces (Fₚ) thereof pole shoe bodies (17a to 17c), the axial dimension (bⱼ) of which is greater than the corresponding dimension (b_{w}) of the winding window (4), which receives the excitation winding (3), between the yoke limbs (16a to 16c) outside the region of the pole surfaces (Fₚ).

2. Drive device according to claim 1, **characterised in that** the pole shoe bodies (17a to 17c) are placeable against the respective yoke limbs (16a to 16c).

3. Linear drive device (15, 18) with at least one excitation winding (3) for producing a variable magnetic field, with a main yoke body (16), which receives the excitation winding (3) and conducts magnetic flux, with yoke limbs (16a, 16, 16c), with a winding-free counter-yoke body (6) lying opposite the main yoke body (16), wherein an axial gap (7) is present between the main yoke body (16) and the counter-yoke body (6), and with an armature body (8) with at least two permanently magnetic magnet parts (9a, 9b) which are arranged axially one behind the other and are magnetised in opposite sense, wherein the armature body (8) is set into an axially oscillating motion with a stroke (H) by the magnetic field of the excitation winding (3) in the gap (7), **characterised in that** the main yoke body (16) and the counter-yoke body (6) form a common yoke body (20) with common lateral yoke limbs (20a, 20c), wherein the main yoke body (16) has a middle yoke limb (20b) which has at its pole surface (Fₚ) facing the armature body (8) an axial width (bⱼ₂) which is at least as large as the axial extent (bₚₘ) of each magnet part (9a, 9b), that the axial width (bⱼ₂) of the middle yoke limb (20b) is greater than that of the lateral yoke limbs (20a, 20c), that the stroke (H) of the armature part (8) during the oscillating motion is smaller than the corresponding dimension (b_{w}) of each winding window (4), which receives the at least one excitation winding (3), between the yoke limbs (20a to 20c) and that on the two axial sides of the yoke body (20) the spacing (a) between the lateral ends of the armature body (8) at the maximum deflection thereof and the respectively adjacent lateral yoke limbs (20a, 20c) is at least half the thickness (dₚₘ) of the magnet parts (9a, 9b).

4. Drive device according to claim 3, **characterised in that** the axial width (bⱼ₃) of the lateral yoke limbs (20a, 20c) is in each instance half as large as that of the middle yolk limb (20b).

5. Drive device according to claim 3, **characterised in that** the axial dimension (b_{w}) of each winding window (4) is equal to the maximum spacing of the pole surfaces (Fₚ) of the middle yoke limb (20b) of the corresponding lateral yoke limbs (20a, 20c).

6. Drive device according to any one of the preceding claims, **characterised in that** the counter-yoke body (6) has yoke limbs (6a to 6c) with an axial width (bⱼ), which corresponds with the yoke limbs (5a, 5c) of the main yoke body (5, 16), at the pole surfaces (Fₚ).

7. Drive device according to any one of claims 1 to 5, **characterised in that** the counter-yoke body (13) is constructed to be plate-shaped or block-shaped.

8. Drive device according to any one of the preceding claims, **characterised in that** the magnet parts (9a, 9b) are constructed to be plate-shaped or strip-shaped.

9. Drive device according to any one of the preceding claims, **characterised in that** the armature body (8) is rigidly connected with a pump piston (11) of a compressor (V).

## Revendications

1. Dispositif d'entraînement linéaire (15, 18) avec au moins un enroulement d'excitation (3) pour produire un champ magnétique variable, avec un corps de culasse principal (16) recevant l'enroulement d'excitation (3) et traversé par un flux magnétique comprenant des branches de culasse (16a à 16c), avec un corps de contre-culasse (6) sans enroulement, placé en regard du corps de culasse principal (16), entre le corps de culasse principal (16) et le corps de contre-culasse (6) étant ménagé un entrefer (7) axial, et avec un corps d'induit (8) comprenant au moins deux parties magnétiques (9a, 9b) à aimants permanents d'aimantation inverse, disposées axialement l'une derrière l'autre, le corps d'induit (8) devant être animé par le champ magnétique de l'enroulement d'excitation (3), dans l'entrefer (7), d'un mouvement oscillatoire axial, **caractérisé en ce que** toutes les branches de culasse (16a, 16b, 16c) du corps de culasse principal (16) présentent à leurs faces polaires (Fₚ) tournées vers le corps d'induit (8) une même largeur axiale (bⱼ), les faces polaires (Fₚ) de branches de culasse (16a, 16b, 16c) voisines étant axialement séparées l'une de l'autre d'une même distance entre faces polaires, et **en ce que** l'extension axiale (bₚₘ) de chaque partie magnétique (9a, 9b) est égale à la somme d'une largeur de surface polaire (bⱼ) et d'une distance entre faces polaires avec un écart de ± 10 % au maximum, et **en ce que** le corps de culasse principal (16) présente au niveau de ses surfaces polaires (Fₚ) des corps de pièce polaire (17a à 17c), dont l'extension axiale (bⱼ) est supérieure à l'extension (b_{w}) correspondante des fenêtres d'enroulement (4) recevant l'enroulement d'excitation (3) entre les branches de culasse (16a à 16c) hors de la zone des surfaces polaires (Fₚ).

2. Dispositif d'entraînement selon la revendication 1, **caractérisé en ce que** les corps de pièce polaire (17a à 17c) peuvent être ajoutés aux branches de culasse (16a à 16c) respectives.

3. Dispositif d'entraînement linéaire (15, 18) avec au moins un enroulement d'excitation (3) pour produire un champ magnétique variable, avec un corps de culasse principal (16) recevant l'enroulement d'excitation (3) et traversé par un flux magnétique comprenant des branches de culasse (16a, 16b, 16c), avec un corps de contre-culasse (6) sans enroulement, placé en regard du corps de culasse principal (16), entre le corps de culasse principal (16) et le corps de contre-culasse (6) étant ménagé un entrefer (7) axial, et avec un corps d'induit (8) comprenant au moins deux parties magnétiques (9a, 9b) à aimants permanents d'aimantation inverse, disposées axialement l'une derrière l'autre, le corps d'induit (8) devant être animé par le champ magnétique de l'enroulement d'excitation (3), dans l'entrefer (7), d'un mouvement oscillatoire axial avec une course (H), **caractérisé en ce que** le corps de culasse principal (16) et le corps de contre-culasse (6) forment un corps de culasse (20) commun avec des branches de culasse latérales (20a, 20c) communes, le corps de culasse principal (16) possédant une branche de culasse centrale (20b), présentant à sa face polaire (Fₚ) tournée vers le corps d'induit (8) une largeur axiale (bⱼ₂) au moins égale à l'extension axiale (bₚₘ) de chaque partie magnétique (9a, 9b), **en ce que** la largeur axiale (bⱼ₂) de la branche de culasse centrale (20b) est supérieure à celle des branches de culasse latérales (20a, 20c), **en ce que** la course (H) du corps d'induit (8) pendant le mouvement oscillatoire est inférieure à l'extension (b_{w}) correspondante de chaque fenêtre d'enroulement (4), recevant ledit au moins un enroulement d'excitation (3), entre les branches de culasse (20a à 20c), et **en ce que** des deux côtés axiaux du corps de culasse (20), la distance (a) entre l'extrémité latérale du corps d'induit (8), lorsque celui-ci est au maximum de son déplacement, et la branche de culasse latérale (20a, 20c) respective voisine, est au moins égale à la mi-épaisseur (dₚₘ) des parties magnétiques (9a, 9b).

4. Dispositif d'entraînement selon la revendication 3, **caractérisé en ce que** la largeur axiale (bⱼ₃) des branches de culasse latérales (20a, 20c) est à chaque fois deux fois inférieure à celle de la branche de culasse centrale (20b).

5. Dispositif d'entraînement selon la revendication 3, **caractérisé en ce que** l'extension axiale (b_{w}) de chaque fenêtre d'enroulement (4) est égale à la distance maximale séparant les faces polaires (Fₚ) de la branche de culasse centrale (20b) des branches de culasse latérales (20a, 20c) correspondantes.

6. Dispositif d'entraînement selon l'une des revendications précédentes, **caractérisé en ce que** le corps de contre-culasse (6) possède des branches de culasse (6a à 6c) dont la largeur axiale (bⱼ) aux faces polaires (Fₚ) correspond aux branches de culasse (5a, 5c) du corps de culasse principal (5, 16).

7. Dispositif d'entraînement selon l'une des revendications 1 à 5, **caractérisé en ce que** le corps de contre-culasse (13) est réalisé en forme de plaque ou en forme de parallélépipède.

8. Dispositif d'entraînement selon l'une des revendications précédentes, **caractérisé en ce que** les parties magnétiques (9a, 9b) sont réalisées en forme de plaque ou de bande.

9. Dispositif d'entraînement selon l'une des revendications précédentes, **caractérisé en ce que** le corps d'induit (8) est relié rigidement à un piston de pompage (11) d'un compresseur (V).
